# FASCICULE DE BREVET EUROPEEN

(11) **EP 2 989 670 B1**
(45) Date de publication et mention de la délivrance du brevet: **11.12.2019**
(21) Numéro de dépôt: 14727588.7
(22) Date de dépôt: 23.04.2014
(51) Int. Cl.: H01M 4/136, H01M 4/36, H01M 4/62, H01M 10/052, H01M 2/34, H01M 10/42, H01M 4/66, H01M 4/58, H01M 10/0565

(54) **ELECTRODE POSITIVE POUR BATTERIE LITHIUM**
POSITIVELEKTRODE FÜR EINE LITHIUMBATTERIE
POSITIVE ELECTRODE FOR A LITHIUM BATTERY

(30) Priorité: 24.04.2013 FR 1353754
(43) Date de publication de la demande: 02.03.2016
(73) Titulaire: Blue Solutions, 29500 Ergué Gabéric (FR); Centre National de la Recherche Scientifique (C.N.R.S.), 75016 Paris (FR)
(72) Inventeur: DESCHAMPS, Marc, 29000 Quimper (FR); BODENEZ, Vincent, 29000 Quimper (FR); LESTRIEZ, Bernard, 44000 Nantes (FR); SOUDAN, Patrick, 44850 Mouzeil (FR); GAUBICHER, Joël, 44000 Nantes (FR); GUYOMARD, Dominique, 44880 Sautron (FR)
(74) Mandataire: Goulard, Sophie
(86) Numéro de dépôt international: PCT/FR2014/050983
(87) Numéro de publication internationale: WO 2014/174212

(56) Documents cités:
- EP-A1- 0 996 181
- CN-A- 102 709 587
- JP-A- 2009 135 010
- US-A- 4 948 685
- US-A1- 2007 082 267

## Description

La présente invention est relative à une électrode positive pour batterie lithium, notamment lithium-métal-polymère (LMP), à son utilisation pour la fabrication d'une batterie au lithium et à la batterie au lithium la comprenant.

Elle s'applique au domaine de la fabrication des batteries Lithium Métal Polymère (LMP). Ce type de batterie se présente généralement sous forme d'un assemblage de films minces enroulés (enroulement du motif suivant {électrolyte / cathode / collecteur / cathode / électrolyte / anode} sur n tours ou de n films minces empilés (coupés et superposés, soit n empilements du motif pré-cité). Ce motif unitaire empilé / complexé a une épaisseur de l'ordre d'une centaine de micromètres. 4 feuilles fonctionnelles entrent dans sa composition : i) une électrode négative (anode) généralement constituée d'une feuille de lithium métallique ou d'un alliage de lithium, ii) un électrolyte composé d'un polymère (généralement du polyoxyéthylène (POE) ou l'un de ses dérivés) et de sels de lithium, iii) une électrode positive (cathode) composée d'un matériau actif d'électrode à base d'oxyde de métal (comme par exemple V₂O₅, LiV₃O₈, LiCoO₂, LiNiO₂, LiMn₂O₄ et LiNi_{0.5}Mn_{0.5}O_{2...}) ou à base de phosphate de type LiMPO₄ où M représente un cation métal sélectionné parmi le groupe Fe, Mn, Co, Ni et Ti, ou de combinaisons de ces cations, comme par exemple LiFePO₄, de carbone et de polymère, et enfin iv) un collecteur de courant généralement constitué d'une feuille de métal et permettant d'assurer la connexion électrique.

La sécurité des batteries LMP est un critère essentiel en vue de leur commercialisation. Utilisées dans de mauvaises conditions, telles qu'en surcharge ou en surdécharge, des réactions parasites exothermiques peuvent survenir et déclencher un départ de feu dans la batterie. Diverses solutions ont déjà été étudiées et proposées dans l'art antérieur pour lutter contre les problèmes de surcharge ou de surdécharges des batteries LMP.

Ainsi, certains industriels ajoutent actuellement aux batteries LMP des systèmes électroniques externes en complément de la batterie. Un système électronique externe permet une désactivation de la batterie en cas de comportement anormal. Toutefois, la présence d'un tel système électronique externe dans une batterie LMP induit un coût supplémentaire.

Afin d'éviter l'emploi de systèmes électroniques externes à la batterie, il a déjà été proposé, notamment dans le brevet US 6,228,516, des cellules électrochimiques intégrant une couche d'un matériau polymère devenant non-conducteur ou semiconducteur en dehors de la plage de tension d'utilisation normale desdites cellules de façon à servir d'auto-interrupteur réversible en cas de surcharge ou de surdécharge desdites cellules (couche isolante). Le matériau polymère est utilisé à titre de seul composant de la couche isolante et peut soit être présent sous la forme d'une couche entre l'électrode positive et le collecteur de courant, soit sous la forme d'une couche enrobant les particules de matériau actif constituant le matériau composite d'électrode. Un tel matériau polymère peut notamment être choisi parmi les polythiophènes, les polypyrroles, les polyanilines, et les poly(3-(4-fluorophényl)-thiophènes). Les systèmes électrochimiques incorporant un tel matériau, bien qu'étant d'une sécurité de fonctionnement amélioré, voient leurs propriétés électrochimiques détériorées à haut potentiel (> 4,0 V).

Il est également connu du document CN 102 709 587 A une cathode pour batterie au lithium comprenant un collecteur de courant recouvert d'une première couche comprenant un polymère conducteur dans la plage de potentiels 2,9V - 3,8V vs Li/Li+ et un polymère fluoré liant. Une deuxième couche comprenant un matériau actif de cathode (LiFePO4) du carbone super conducteur et du fluorure de polyvinylidène est déposée sur cette première couche. La batterie renferme un électrolyte comprenant un sel de lithium.

Il existe donc un besoin pour une batterie LMP présentant une sécurité améliorée ainsi que des propriétés électrochimiques au moins équivalentes à celles d'une batterie LMP de référence, c'est-à-dire à une batterie LMP classique, ne comportant aucun système permettant de lutter contre les surcharges ou les surdécharges.

Les inventeurs se sont donné pour but de pourvoir à un matériau composite d'électrode pour batterie lithium-métal-polymère permettant d'accéder à un tel résultat.

La présente invention a donc pour objet une électrode positive pour batterie au lithium, et notamment pour batterie lithium-métal-polymère, comprenant au moins un matériau actif d'électrode positive, au moins un liant, au moins un agent conférant des propriétés de conduction électronique, et au moins un collecteur de courant, ladite électrode étant caractérisée en ce qu'elle comprend :
**a)** une couche électroactive d'un matériau composite comprenant :
   - au moins un polymère P1 choisi parmi les polymères qui sont conducteurs dans la fenêtre de potentiels d'utilisation de ladite batterie et isolants à un potentiel inférieur à 1,5 V vs Li/Li⁺ et/ou supérieur à 4,8 V vs Li/Li⁺,
   - au moins un polymère P2 choisi parmi les polymères halogénés,
   - au moins un sel de lithium, présente en une concentration molaire comprise entre 0,1M et 5M
**b)** un collecteur de courant,
**c)** une couche d'un matériau composite d'électrode positive comprenant :
   - au moins un matériau actif d'électrode positive,
   - au moins un agent conférant des propriétés de conduction électronique,
   - au moins un liant, et
   - au moins un sel de lithium ;
et en ce que la couche électroactive est intercalée entre le collecteur de courant et la couche de matériau composite d'électrode positive.

Une telle électrode positive permet d'aboutir à une batterie au lithium, en particulier à une batterie LMP, présentant une sécurité améliorée ainsi que des propriétés électrochimiques au moins équivalentes à celles des batteries LMP classiques. En effet, la conductivité électrique de l'électrode est modulée *in situ* par la présence du polymère P1 présent dans la couche électroactive utilisée en tant que couche intermédiaire entre le collecteur de courant et la couche de matériau composite d'électrode positive. Le polymère P1 présent dans la couche électroactive va ainsi jouer le rôle d'interrupteur : fortement résistif à bas et/ou haut potentiel mais conducteur dans le domaine d'activité de l'électrode positive, c'est-à-dire dans la fenêtre de potentiels d'utilisation de la batterie LMP dans laquelle ladite électrode positive est intégrée. Ce saut de conductivité du polymère P1 permet ainsi de limiter fortement les phénomènes apparaissant lors d'une surcharge et/ou d'une surdécharge de la batterie, tout en conservant une utilisation classique de la batterie dans sa gamme de potentiels.

Le polymère P2 permet d'améliorer l'homogénéité de la couche électroactive tout en ne perturbant pas, par sa nature, les performances de la batterie et de la couche électroactive. Les inventeurs se sont en effet aperçus que l'inhomogénéité dans le polymère conducteur P1 ne permettait pas un passage optimal du courant par la couche électroactive, et minimisait les performances de la batterie. L'utilisation d'un polymère halogéné (P2) en tant que liant permet également une mise en forme plus facile de la couche électroactive et de résoudre ce problème.

On notera également que la mise en forme d'un polymère conducteur en couche est beaucoup plus simple que l'introduction de ce polymère directement dans la couche comprenant le matièrau actif d'électrode, également évoqué dans l'état de la technique, car le polymère conducteur doit alors encapsuler tout le matériau actif, ce qui est extrêmement difficile et peut aussi générer des inhomogénéités conduisant à un fonctionnement non optimal de la batterie.

Grâce à l'ajout du polymère halogéné dans la couche électroactive, le polymère conducteur ne dégrade pas les performances de la batterie en fonctionnement, même sous forme de couche. On peut donc obtenir une batterie avec de bonnes performances, dont on assure la sécurité en surcharge et/ou en surdécharge et demeurant de fabrication très simple.

On notera concernant l'électrode positive, qu'un même matériau peut remplir deux des fonctions indiquées ci-dessus. Par exemple, un même matériau peut être à la fois le matériau actif d'électrode positive et l'agent conférant les propriétés de conduction électronique.

Le polymère P1 est de préférence choisi parmi les polymères qui sont isolants à un potentiel inférieur à 2,8V et supérieur à 3,6V.

Selon une forme de réalisation particulière et préférée de l'invention, le polymère P1 est choisi parmi les polyanilines (conducteur entre 3,2 et 4,8 V), les polythiophènes (conducteurs entre 3,8 et 4,8 V), les polypyrroles (conducteurs entre 3,3 et 4,3 V) et les poly3,4-éthylènedioxythiophènes (conducteurs entre 1,5 et 2,3 V et entre 3,8 et 4,7 V). Selon une forme de réalisation particulièrement préférée de l'invention, le polymère P1 est choisi parmi les polyanilines.

Le polymère halogéné P2 est de préférence un polymère fluoré choisi parmi les homopolymères et les copolymères de chlorure de vinyle, de fluorure de vinylidène, de chlorure de vinylidène, de tetrafluorure d'éthylène, de chlorotrifluoroéthylène, les copolymères de fluorure de vinylidène et d'hexafluoropropylène, et les mélanges de ces homopolymères et copolymères. Parmi ces polymères, le fluorure de polyvinylidène (PVdF) est particulièrement préféré.

Au sein de la couche électroactive, le polymère P2 représente de préférence de 1 à 20 % en masse environ, et encore plus particulièrement de 1 à 5 % en masse par rapport à la masse du polymère P1. En effet, un taux plus faible ne serait pas suffisant pour améliorer la tenue mécanique de la couche électroactive (film), tandis qu'un taux plus élevé aurait pour conséquence d'accroitre la résistivité du film. Dans ce dernier cas, la couche électroactive deviendrait trop isolante pour l'application souhaitée.

La présence d'un sel de lithium dans la couche électroactive permet d'améliorer encore plus la performance de la batterie en améliorant notamment la compatibilité entre le polymère P1 et le polymère P2 et donc l'homogénéité de la couche électroactive.

Dans ce cas, le ou les sels de lithium utilisable(s) dans la couche électroactive sont de préférence choisis parmi les sels de lithium classiquement utilisés dans les batteries au lithium et en particulier dans les batteries LMP et parmi lesquels on peut notamment citer LiBF₄, LiPF₆, le bis(trifluorométhylsulfonyl)imide de lithium (LiTFSI), le bis(fluorosulfonyl)imide de lithium (LiFSI), le bis(pentafluoroéthylsulfonyl)imide de lithium (LiBETI), LiAsF₆, LiCF₃SO₃, LiSbF₆, LiSbCl₆, Li₂TiCl₆, Li₂SeCl₆, Li₂B₁₀Cl₁₀, Li₂B₁₂Cl₁₂, et le bis(oxalato)borate de lithium (LiBOB).

Selon une forme de réalisation particulièrement préférée de l'invention, le ou les sels de lithium sont choisis parmi LiTFSI, LiFSI, LiBF₄, LiPF₆, et LiBETI. Selon une forme de réalisation tout particulièrement préférée de l'invention, le sel de lithium est LiTFSI ou LiFSI, ceux-ci permettant d'obtenir la meilleure compatibilité entre les différents constituants de la couche électroactive (polymères P1 et P2).

Le ou les sels de lithium sont présents en une concentration molaire comprise entre 0,1M (mol/L) et 5M 0,5M environ.

La couche électroactive peut être préparée par mélange des différents constituants dans un solvant, puis par application du mélange résultant sur un collecteur de courant, par exemple à l'aide d'une table à enduction, puis séchage sous air sec pendant une période allant jusqu'à 48 heures. Le solvant utilisé pour la préparation de la couche électroactive appartient de préférence à la famille des solvants polaires aprotiques, parmi lesquels on peut notamment citer la N-méthyl-2-pyrrolidone (NMP), le diméthylsulfoxyde (DMSO) et le diméthylformamide (DMF). Parmi ces solvants, la N-méthyl-2-pyrrolidone (NMP) est préférée.

Selon l'invention, le matériau actif d'électrode positive est de préférence un matériau à base de phosphate de fer, plus préférentiellement du LiFePO₄ se présentant sous la forme de particules nues ou comportant un revêtement carboné. Dans ce dernier cas, l'agent conférant des propriétés de conduction électronique fait partie du matériau actif d'électrode positive et il n'est alors pas nécessaire d'ajouter un agent conférant des propriétés de conduction électronique supplémentaire au mélange des ingrédients entrant dans la composition du matériau composite la couche d'électrode positive, ou alors dans une moindre quantité, du fait de la présence de carbone à la surface des particules de LiFePO₄.

Le matériau actif d'électrode positive représente de préférence de 60 à 85 % en masse environ, et encore plus préférentiellement de 70 à 80 % en masse environ de la masse totale des ingrédients entrant dans la composition du matériau composite de la couche d'électrode positive à l'état sec.

L'agent conférant des propriétés de conduction électronique peut être du carbone, de préférence choisi parmi les noirs de carbone tels que le noir d'acétylène, les noirs de carbone à haute surface spécifique tels que le produit vendu sous la dénomination Ketjenblack® EC-600JD par la société AKZO NOBEL, les nanotubes de carbone, le graphite, et les mélanges de ces matériaux.

Selon l'invention, le matériau conférant des propriétés de conduction électronique représente de préférence de 0,1 à 10 % en masse environ lorsque des carbones de faible surface spécifique sont utilisés (à titre indicatif, surface spécifique inférieure à 200 m2/g) ou entre 0,1 et 2,5 % en masse environ lorsque des carbones de haute surface spécifique sont utilisés (à titre indicatif, surface spécifique supérieure à 1000 m²/g), lesdits pourcentages étant exprimés par rapport à la masse totale des ingrédients entrant dans la composition du matériau composite de la couche d'électrode positive à l'état sec. Le pourcentage de carbone est à moduler en fonction du taux de carbone déjà éventuellement compris dans les particules de LiFeP0₄. L'utilisation de particules de LiFePO₄ suffisamment enrobées de carbone permet éventuellement de s'affranchir de la nécessité d'ajouter une charge carbonée. A l'inverse l'utilisation de particules nues de LiFePO₄ nécessite généralement d'incorporer un matériau conducteur.

Le liant utilisable dans le matériau composite de la couche d'électrode positive selon l'invention se présente de préférence sous la forme de poudre, de granulés ou d'une dispersion aqueuse. Il est de préférence choisi parmi les polyéthers tels que les polymères, copolymères et terpolymères de polyoxyéthylène (POE), polyoxypropylène et polyoxybutylène.

Ce liant représente de préférence de 10 à 30 % en masse environ et encore plus préférentiellement de 15 à 25 % en masse environ, par rapport à la masse totale des ingrédients entrant dans la composition du matériau composite de la couche d'électrode positive à l'état sec.

Le sel de lithium utilisable dans le matériau composite de la couche d'électrode positive peut être choisi parmi les sels de lithium mentionnés précédemment pour la couche électroactive. Parmi de tels sels LiTFSI, LiFSI et LiBETI sont préférés.

La teneur en sel de lithium au sein du matériau composite de la couche d'électrode positive varie de préférence de 3 à 10 % environ en masse, et encore plus préférentiellement de 4 à 8 % environ en masse par rapport à la masse totale du matériau composite de la couche d'électrode positive à l'état sec.

Tout comme la couche électroactive, la couche de matériau composite d'électrode positive peut être préparée par mélange des différents ingrédients dans un solvant puis par application du mélange résultant sur la couche électroactive précédemment déposée sur un collecteur de courant, par exemple à l'aide d'une table à enduction, puis séchage sous air sec pendant une période allant jusqu'à 48 heures. Les solvants utilisables pour la préparation du matériau composite de la couche d'électrode positive sont de préférence choisis parmi l'eau, les alcools (tels que le méthanol, l'éthanol, ou l'isopropanol) et les cétones (tels que l'acétone).

Selon une forme de réalisation préférée de l'invention, la couche électroactive présente une épaisseur variant de 1 à 15 µm environ, pour une couche de matériau composite d'électrode positive dont l'épaisseur varie de 20 à 100 µm environ.

Le collecteur de courant pour l'électrode positive est généralement constitué d'une feuille d'aluminium d'une épaisseur allant de 4 µm à 30 µm, préférentiellement de 5 à 15 µm, possédant en outre généralement des couches de protection anticorrosion sur chacune des faces en contact avec la couche électroactive, pour éviter toute réaction chimique au contact de ses constituants, notamment avec le sel de lithium.. Cette couche de protection anticorrosion peut par exemple être constituée d'une laque conductrice électroniquement, chimiquement inerte vis-à-vis des composants de la couche électroactive, ou bien d'un revêtement chimiquement inerte vis-à-vis des composants de la couche électroactive comme par exemple une couche d'or, une couche de nitrure de titane, une couche de matériau carboné, tel que le graphite, ou une couche de titane.

L'invention a également pour objet l'utilisation de l'électrode positive telle que définie précédemment, pour la fabrication d'une batterie au lithium, en particulier d'une batterie LMP.

Enfin, l'invention a également pour objet une batterie au lithium comportant au moins une électrode positive, une électrode négative, un électrolyte et un collecteur de courant, caractérisée en ce que l'électrode positive est telle que définie précédemment.

Selon l'invention, l'électrode négative est de préférence une feuille de lithium métallique.

Outre les dispositions qui précèdent, l'Invention comprend encore d'autres dispositions qui ressortiront de la description qui va suivre, qui se réfère à des exemples de, ainsi qu'aux figures annexées dans lesquelles :

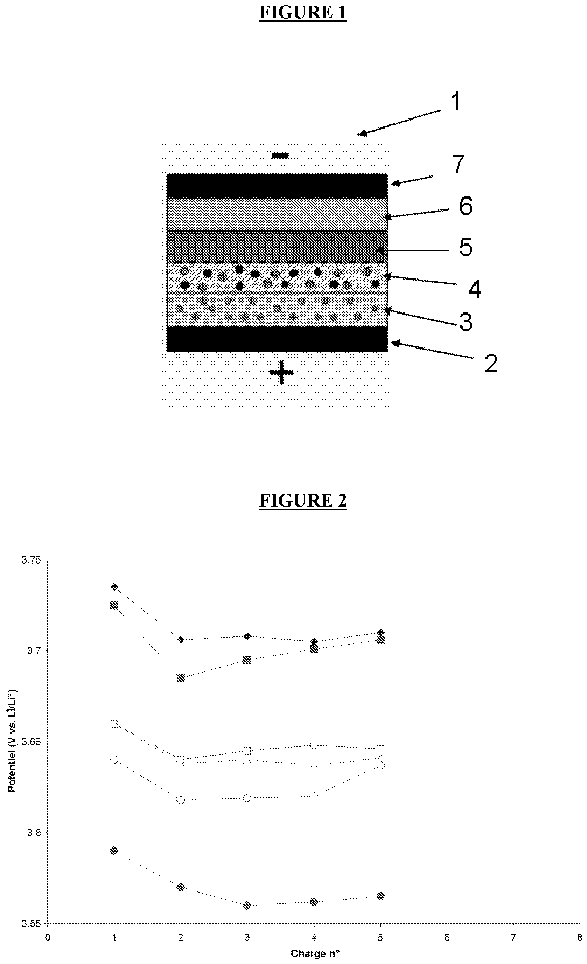

- la figure 1 représente une vue schématique en coupe d'une batterie LMP 1 conforme à l'invention comportant un collecteur de courant 2 sur lequel repose une couche électroactive 3 qui est en contact direct avec une couche de matériau composite d'électrode positive 4 séparée d'une couche d'électrode négative 6 et d'un collecteur de courant 7 par une couche d'électrolyte 5.
- la figure 2 représente l'évolution du potentiel d'oxydation (V) d'électrodes positives de plusieurs batteries conformes à l'invention comparativement à des batteries comparatives en fonction du nombre de charge des batteries. Sur cette figure chacune des courbes correspond aux différentes batteries testées :
   * Carrés pleins : batterie conforme à l'invention dont la couche électroactive comprend un sel de lithium en une quantité de 0,25 mol/L (batterie B1) ;
   * Triangles vides : batterie conforme à l'invention dont la couche électroactive comprend un sel de lithium en une quantité de 0,5 mol/L (batterie B2) ;
   * Ronds vides : batterie conforme à l'invention dont la couche électroactive comprend un sel de lithium en une quantité de 3 mol/L (batterie B3) ;
   * Losanges pleins : batterie comparative dont la couche électroactive ne comprend pas de sel de lithium (batterie B4) ;
   * Ronds pleins : batterie comparative dans laquelle l'électrode positive était identique en tout point à celles des batteries B1 à B4, sauf qu'elle ne contenant pas de couche électroactive (batterie BC0)
   * Carrés vides : batterie comparative dans laquelle l'électrode positive étant en tout point identique à celle de la batterie B1, sauf que la couche électroactive ne contenait pas de polyvinylidène (batterie BC1) ;
- la figure 3 présente les courbes d'impédances dans le plan de Nyquist obtenues au cours de la première charge pour différents potentiels en circuit ouvert dans le domaine [2,5 V - 3,7 V] *vs.* Li⁺/Li⁰ avec un collecteur de courant enrobé d'une couche électroactive (0,25M de LiTFSI) de 10 µm en matière humide ;
- la figure 4 donne les résultats de cyclage d'une batterie conforme à l'invention (figure 4a) comparativement à une batterie ne comportant pas de couche électroactive (figure 4b).

### EXEMPLES

### Exemple 1 : Préparation d'une électrode positive conforme à l'invention

0,54 g de polyaniline (PAni), 0,054 g de fluorure de polyvinylidène (PVdF) et 0,387 g de sel de lithium (LiTFSI) ont été mis en suspension dans 157 ml de solvant NMP. Cette solution a été placée sous agitation magnétique durant quatre heures puis déposée sur un collecteur de courant constitué d'une feuille d'aluminium carboné, à l'aide d'une table à enduction.

Ce dépôt a été séché sous air sec pendant 48 heures.

On a obtenu un collecteur de courant recouvert d'une couche électroactive constituée de 55 % en masse de PAni, de 5,5 % en masse de PVdF et de 39,5% de sel de lithium. Cette couche électroactive avait une épaisseur de 10 µm et une concentration en sel de lithium de 0,5 M.

Une couche de matériau composite d'électrode positive, constituée de 54 % en masse de LiFePO₄ à titre de matériau actif d'électrode ainsi que de carbone et d'un liant polymère, a ensuite été appliquée sur cette couche électroactive par laminage.

On a ainsi obtenu une électrode positive utilisable pour la préparation d'une batterie LMP, en particulier pour la préparation d'une batterie ayant une sécurité accrue vis-à-vis à de problèmes liés à la surdécharge.

### Exemple 2 : Mise en évidence des effets de la présence d'un sel de lithium au sein de la couche électroactive sur les performances d'une batterie LMP

Le sel de lithium présent au sein de la couche de matériau composite d'électrode positive et/ou dans la couche d'électrolyte peut diffuser dans la couche électroactive au moment de l'assemblage de la batterie et lors de son fonctionnement.

Cependant, ainsi que cela va être démontré ci-après, le prédopage de la couche électroactive par un sel de lithium permet d'améliorer encore les performances de la batterie, notamment ses propriétés électrochimiques à haut potentiel (>3.0V).

Une batterie conforme à l'invention, dans un montage de type Swagelok®, a été préparée avec, en tant qu'électrode positive, l'électrode positive conforme à l'invention telle que préparée ci-dessus à l'exemple 1 ; une solution de LiTFSI molaire dans un mélange EC/DMC (1/1, v/v) en tant qu'électrolyte et une feuille de lithium métallique à titre d'électrode négative. Cette batterie conforme à l'invention est dénommée batterie B2

D'autres batteries conformes à l'invention ont été préparées en modifiant la concentration de sel de lithium dans l'électrode positive.

Ces batteries sont caractérisées par le fait qu'elles renferment une couche électroactive comprenant un polymère P1 (PAni), un polymère P2 (PVdF) et éventuellement un sel de lithium en une quantité variable, ladite couche électroactive étant intercalée entre le collecteur de courant de l'électrode positive et la couche de matériau composite d'électrode positive.

Les batteries conformes à l'invention représentées avaient pour concentration respective en sel de lithium :
- 0,25 mol/L de LiTFSI, (désignée B1)
- 0,5 mol/L de LiTFSI, (désignée B2)
- 3 mol/L de LiTFSI, (désignée B3)
- Pas de sel de lithium (désignée B4- comparative)

Différentes batteries comparatives (BC) ont également été préparées selon le même procédé :
- Batterie Comparative BC0 : électrode positive identique en tout point à celles des batteries B1 à B4 selon l'invention sauf qu'elle ne contenait pas de couche électroactive ;
- Batterie Comparative BC1 : identique en tout point à la batterie B1 sauf que la couche électroactive ne comprenait pas de PVdF ;

Chacune de ces batteries a été soumise à 5 cycles. Dans chaque cas, le courant de charge était équivalent à l'insertion d'un ion lithium par mole de matériau actif en quatre heures et le courant de décharge à la désinsertion d'un ion lithium par mole de matériau actif en deux heures. Le domaine de potentiel testé était 2-3,65 V vis-à-vis du couple Li⁺/Li^{o}

L'évolution du potentiel d'oxydation de l'électrode positive de chacune de ces batteries, en fonction de la concentration en sel de lithium dans la couche électroactive, est reportée sur la figure 2 annexée, sur laquelle le potentiel du pic d'oxydation (V) est fonction du nombre de charge de la batterie. Sur cette figure, la légende est comme suit :
- la batterie B1 est représentée en carrés pleins,
- la batterie B2 est représentée en triangles vides,
- la batterie B3 est représentée en ronds vides,
- la batterie comparative B4 est représentée en losanges pleins,
- la batterie comparative BC0 est représentée en ronds pleins,
- la batterie comparative BC1 est représentée en carrés vides,

Ainsi les résultats présentés sur la figure 2 annexée montrent qu'il est possible de classer les résultats obtenus en trois catégories :
- Batterie comparative ne comportant pas de couche électroactive (BC0) : on observe un potentiel d'oxydation moyen d'environ 3,56V. Cette batterie, qui ne présente pas de dispositif de sécurité en surcharge ou surdécharge, présente en revanche le comportement « idéal » s'agissant du potentiel du pic d'oxydation,
- Batterie comparative comportant une couche électroactive ne contenant pas de sel de lithium (B4) ou batterie conforme à l'invention comportant une faible concentration de sel de lithium (≈ 0,25M) (B1) : une très forte polarisation, conduisant à un décalage d'environ 0,2V du pic d'oxydation, est observée. On notera qu'un taux de PVdF faible permet de limiter l'augmentation de polarisation dûe à la couche électroactive additionnelle.
- Batteries conformes à l'invention comportant une couche électroactive contenant un sel de lithium en une quantité supérieure ou égale à 0,5M (B2 et B3) : le pic d'oxydation est situé à des potentiels intermédiaires (0,1V par rapport à la batterie comparative BC0 (sans couche électroactive). Ce décalage est acceptable. On remarque qu'au-delà d'une concentration de 0,5M en sel de lithium, on améliore légèrement les propriétés de l'électrode en terme de potentiel de pic d'oxydation mais cela n'est pas très significatif et, au vu du coût du sel de lithium, cela montre qu'il est donc préférentiel de fabriquer la couche électroactive avec une concentration en sel de lithium aux alentours de 0,5 M, notamment entre 0,4 et 0,7 M , ce qui permet d'obtenir une électrode ayant un rapport qualité/prix le plus intéressant,
- On remarque également que la batterie présentant une couche électroactive sans PvDF (Batterie comparative BC1) présente des meilleures propriétés en terme de potentiel de pic d'oxydation que lorsque la couche électroactive présente du PvdF. Cela signifie que la concentration optimale de sel de lithium évolue de façon croissante en fonction de la concentration en PVdF.

Comme déjà indiqué ci-dessus, ces résultats mettent en avant l'importance de la présence préférentielle d'un sel de lithium au sein de la couche électroactive dans le bon fonctionnement de la batterie : il est préférable de prédoper la couche électroactive à l'aide d'un sel de lithium pour ne pas détériorer les propriétés électrochimiques à haut potentiel (3.0V) de l'électrode positive. Toutefois une concentration en sel trop importante (B3 : Sel de lithium = 3M), en plus d'être coûteuse, peut rendre la couche électroactive conductrice dans toute la gamme de potentiel, celle-ci ne remplirait alors plus son rôle de couche isolante à bas potentiel.

Afin d'interpréter ce phénomène, une étude par spectroscopie d'impédance complexe a été réalisée sur la batterie B1.

Les mesures d'impédance ont été effectuées sur un échantillon de surface active égale à 1 cm², tous les 200 mV pour des potentiels compris entre 2,5 V *vs.* Li⁺/Li⁰ et 3,7 V *vs.* Li⁺/L⁰ lors de première charge.

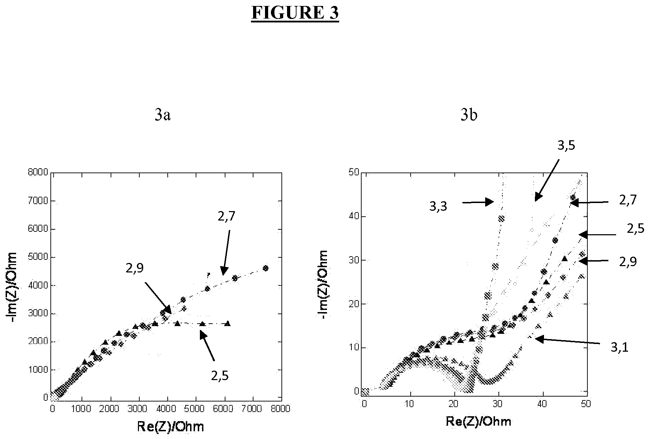

Les résultats obtenus sont reportés sur la figure 3 (figures 3a et 3b) annexée sur laquelle l'impédance (Im(Z)) (exprimée en Ohm) est fonction de la résistance (Re(Z)) (exprimée en Ohm) pour chacun des potentiels (chacun des potentiels est indiqué respectivement à côté de la courbe qu'il désigne).

A travers cette étude on constate qu'il est possible de décomposer la charge de la batterie en deux étapes distinctes :
- pour un potentiel égal ou inférieur à 2,9 V *vs.* Li⁺/Li⁰. La résistivité du système est élevée (>10000 Ω/cm²). Ce résultat met en lumière les propriétés isolantes du polymère conducteur présent dans la couche électroactive à bas potentiel.
- pour un potentiel supérieur à 3,0 V *vs.* Li⁺/Li⁰. La résistivité du système est faible (≈20 Ω/cm²). Cette valeur, similaire à celle qui serait obtenue (≈25 Ω/cm²) dans une batterie sans couche électroactive, démontre qu'à haut potentiel la couche électroactive devient « transparente », c'est à dire qu'elle n'induit pas de résistance supplémentaire au système.

### Exemple 3 : Cyclage d'une batterie conforme à l'invention

Dans cet exemple, on a réalisé le cyclage de la batterie B2 conforme à l'invention et telle que préparée ci-dessus à l'exemple 2.

La batterie B2 a été cyclée à un régime équivalent à l'insertion d'un lithium en 2 heures en décharge et à la désinsertion d'un lithium en 4 heures en charge dans la gamme de potentiel [2,5-3,7] V.

A titre comparatif, la batterie BC0 telle que préparée ci-dessus à l'exemple 2, ne comportant pas de couche électroactive, a été cyclée dans les mêmes conditions.

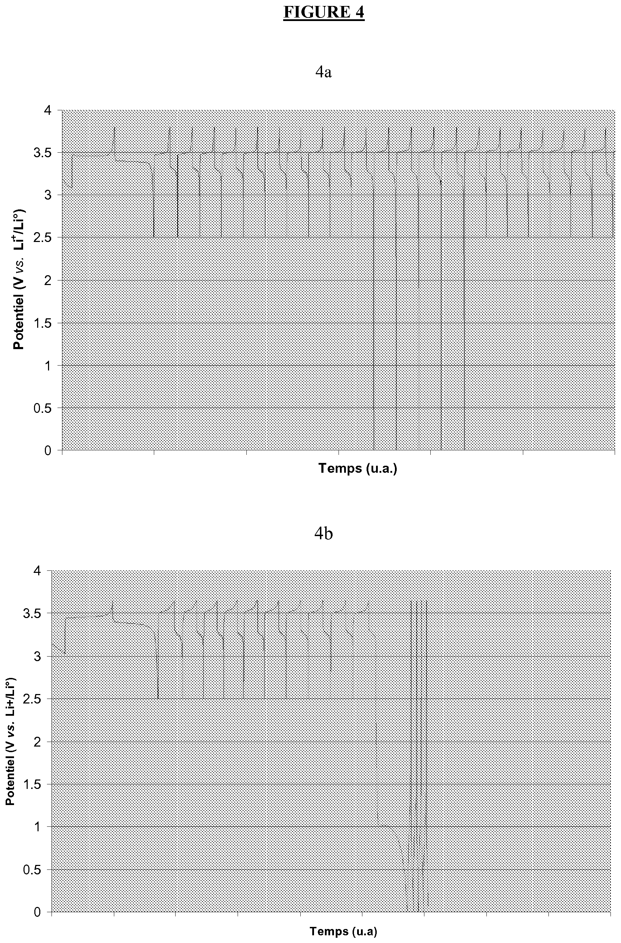

Les résultats correspondant sont présentés sur la figure 4 annexée sur laquelle la courbe U (en volts) en fonction du temps (en unités arbitraires) (U=f(t)) correspondant à la batterie B2 est présentée figure 4a et la courbe U=f(t) correspondant à la batterie BC0 est présentée sur la figure 4b. Conformément à la batterie BC0 sans couche électroactive (figure 4b), nous pouvons décrire un cycle en deux étapes distinctes :
- la charge : caractérisée par un plateau initialement présent à 3,5V
- la décharge : caractérisée par un plateau initialement présent à 3,35V

On observe ainsi que dans cette zone de potentiel, la présence de la couche électroactive additionnelle ne modifie pas les propriétés de la batterie (figure 4a).

A bas potentiel, l'effet d'un ajout d'une couche électroactive est beaucoup plus marqué. Alors que dans le cas d'une batterie classique (batterie BC0 : figure 4b), la première décharge à 0V (cycle 11) met en lumière l'existence d'un phénomène faiblement réversible et conduisant à une dégradation rapide des propriétés électrochimiques du système, la courbe U=f(t), proposée figure 4a et correspondant à la batterie B2 conforme à la présente invention, c'est-à-dire intégrant une couche électroactive, montre une absence totale de plateau à bas potentiel.

Ce résultat met ainsi en évidence le rôle bénéfique, à bas potentiel, de la couche électroactive pour lutter contre les problèmes de surdécharge.

## Revendications

1. Electrode positive pour batterie au lithium, et en particulier à une batterie lithium-métal-polymère, comprenant au moins un matériau actif d'électrode positive, au moins un liant, au moins un agent conférant des propriétés de conduction électronique et au moins un collecteur de courant, ladite électrode étant **caractérisée en ce qu'**elle comprend :
**a)** une couche électroactive d'un matériau composite comprenant :
- au moins un polymère P1 choisi parmi les polymères qui sont conducteurs dans la fenêtre de potentiels d'utilisation de ladite batterie et isolants à un potentiel inférieur à 1,5 V vs Li/Li⁺ et/ou supérieur à 4,8 V vs Li/Li⁺.,
- au moins un polymère P2 choisi parmi les polymères halogénés, et
- au moins un sel de lithium, présent en une concentration molaire comprise entre 0,1M et 5M,
**b)** un collecteur de courant,
**c)** une couche d'un matériau composite d'électrode positive comprenant :
- au moins un matériau actif d'électrode positive,
- au moins un agent conférant des propriétés de conduction électronique,
- au moins un liant, et
- au moins un sel de lithium ;
et **en ce que** la couche électroactive est intercalée entre le collecteur de courant et la couche de matériau composite d'électrode positive.

2. Electrode selon la revendication 1, **caractérisée en ce que** le polymère P1 est choisi parmi les polymères qui sont insolants à un potentiel inférieur à 2,8V et supérieur à 3,6V.

3. Electrode selon la revendication 1, **caractérisée en ce que** le polymère P1 est choisi parmi les polyanilines, les polythiophènes, les polypyrroles et les poly3,4-éthylènedioxythiophènes.

4. Electrode selon l'une quelconque des revendications précédentes, **caractérisée en ce que** le polymère halogéné P2 est un polymère fluoré choisi parmi les homopolymères et les copolymères de chlorure de vinyle, de fluorure de vinylidène, de chlorure de vinylidène, de tetrafluorure d'éthylène, de chlorotrifluoroéthylène, les copolymères de fluorure de vinylidène et d'hexafluoropropylène, et les mélanges de ces homopolymères et copolymères.

5. Electrode selon la revendication 4, **caractérisée en ce que** le polymère P2 est du fluorure de polyvinylidène.

6. Electrode selon l'une quelconque des revendications précédentes, **caractérisée en ce que** le polymère P2 représente de 1 à 20 % en masse par rapport à la masse du polymère P1.

7. Electrode selon l'une quelconque des revendications précédentes, **caractérisée en ce que** le ou les sels de lithium sont choisis parmi LiBF₄, LiPF₆, le bis(trifluorométhylsulfonyl)imide de lithium, le bis(fluorosulfonyl)imide de lithium (LiFSI), le bis(pentafluoroéthylsulfonyl)imide de lithium, LiAsF₆, LiCF₃SO₃, LiSbF₆, LiSbCl₆, Li₂TiCl₆, Li₂SeCl₆, Li₂B₁₀Cl₁₀, Li₂B₁₂Cl₁₂, et le bis(oxalato)borate de lithium.

8. Electrode selon l'une quelconque des revendications précédentes, **caractérisée en ce que** le matériau actif d'électrode positive est un matériau à base de phosphate de fer.

9. Electrode selon la revendication 8, **caractérisée en ce que** le matériau actif d'électrode positive est du LiFePO₄ se présentant sous la forme de particules nues ou comportant un revêtement carboné.

10. Electrode selon l'une quelconque des revendications précédentes, **caractérisée en ce que** l'agent conférant des propriétés de conduction électronique est du carbone, choisi parmi les noirs de carbone, les nanotubes de carbone, le graphite, et les mélanges de ces matériaux.

11. Electrode selon l'une quelconque des revendications précédentes, **caractérisée en ce que** la couche électroactive présente une épaisseur variant de 1 à 15 µm, pour une couche de matériau composite d'électrode positive dont l'épaisseur varie de 20 à 100 µm.

12. Batterie au lithium comportant au moins une électrode positive, une électrode négative, un électrolyte et un collecteur de courant pour l'électrode positive, **caractérisée en ce que** l'électrode positive est telle que définie à l'une quelconque des revendications 1 à 11.

## Patentansprüche

1. Positivelektrode für eine Lithiumbatterie und insbesondere eine Lithium-Metall-Polymer-Batterie, umfassend mindestens ein aktives Material einer Positivelektrode, mindestens ein Bindemittel, mindestens ein Mittel, das Eigenschaften der elektronischen Leitung verleiht, und mindestens einen Stromkollektor, wobei die Elektrode **dadurch gekennzeichnet ist, dass** sie Folgendes umfasst:
a) eine elektroaktive Schicht eines Verbundmaterials, umfassend:
- mindestens ein Polymer P1, ausgewählt aus den Polymeren, die leitend im Fenster von Nutzungspotenzialen der Batterie und isolierend bei einem Potenzial von weniger als 1,5 V vs Li/Li⁺ und/oder mehr als 4,8 V vs Li/Li⁺ sind,
- mindestens ein Polymer P2, ausgewählt aus den halogenierten Polymeren, und
- mindestens ein Lithiumsalz, das in einer Molarkonzentration im Bereich zwischen 0,1 M und 5 M vorhanden ist,
**b)** einen Stromkollektor,
**c)** eine Schicht aus einem Verbundmaterial einer Positivelektrode, umfassend:
- mindestens ein aktives Material einer Positivelektrode,
- mindestens ein Mittel, das Eigenschaften der elektronischen Leitung verleiht,
- mindestens ein Bindemittel, und
- mindestens ein Lithiumsalz,
und dadurch, dass die elektroaktive Schicht zwischen dem Stromkollektor und der Schicht aus Verbundmaterial einer Positivelektrode eingeschoben ist.

2. Elektrode nach Anspruch 1, **dadurch gekennzeichnet, dass** das Polymer P1 ausgewählt ist aus den Polymeren, die isolierend bei einem Potenzial von weniger als 2,8V und mehr als 3,6V sind.

3. Elektrode nach Anspruch 1, **dadurch gekennzeichnet, dass** das Polymer P1 ausgewählt ist aus den Polyanilinen, den Polythiophenen, den Polypyrrolen und den Poly3,4-ethylendioxythiophenen.

4. Elektrode nach einem der vorhergehenden Ansprüche, **dadurch gekennzeichnet, dass** das halogenierte Polymer P2 ein fluoriertes Polymer ist, ausgewählt aus den Homopolymeren und den Copolymeren von Vinylchlorid, Vinylidenfluorid, Vinylidenchlorid, Ethylentetrafluorid, Chlortrifluorethylen, den Copolymeren von Vinylidenfluorid und Hexafluorpropylen und den Mischungen dieser Homopolymere und Copolymere.

5. Elektrode nach Anspruch 4, **dadurch gekennzeichnet, dass** das Polymer P2 Polyvinylidenfluorid ist.

6. Elektrode nach einem der vorhergehenden Ansprüche, **dadurch gekennzeichnet, dass** das Polymer P2 von 1 bis 20 Massenprozent mit Bezug auf die Masse des Polymers P1 darstellt.

7. Elektrode nach einem der vorhergehenden Ansprüche, **dadurch gekennzeichnet, dass** das oder die Lithiumsalz(e) ausgewählt sind aus LiBF₄, LiPF₆, Lithium-Bis(trifluoromethylsulfonyl)imid, Lithium-Bis(fluorsulfonyl)imid (LiFSI), Lithium-Bis(pentafluorethylsulfonyl)imid, LiAsF₆, LiCF₃SO₃, LiSbF₆, LiSbCl₆, Li₂TiCl₆, Li₂SeCl₆, Li₂B₁₀Cl₁₀, Li₂B₁₂Cl₁₂ und Lithium-Bis(oxalat)borat.

8. Elektrode nach einem der vorhergehenden Ansprüche, **dadurch gekennzeichnet, dass** das aktive Material der Positivelektrode ein Material auf Basis von Eisenphosphat ist.

9. Elektrode nach Anspruch 8, **dadurch gekennzeichnet, dass** das aktive Material der Positivelektrode LiFePO₄ ist, das die Form von reinen Partikeln aufweist oder eine kohlenstoffhaltige Beschichtung umfasst.

10. Elektrode nach einem der vorhergehenden Ansprüche, **dadurch gekennzeichnet, dass** das Mittel, das Eigenschaften der elektronischen Leitung verleiht, Kohlenstoff ist, ausgewählt aus Rußen, Kohlenstoffnanoröhrchen, Graphit und Mischungen dieser Materialien.

11. Elektrode nach einem der vorhergehenden Ansprüche, **dadurch gekennzeichnet, dass** die elektroaktive Schicht eine Dicke aufweist, die von 1 bis 15 µm variiert, bei einer Schicht von Verbundmaterial einer Positivelektrode, deren Dicke von 20 bis 100 µm variiert.

12. Lithiumbatterie, umfassend mindestens eine Positivelektrode, eine Negativelektrode, einen Elektrolyt und einen Stromkollektor für die Positivelektrode, **dadurch gekennzeichnet, dass** die Positvelektrode wie in einem der Ansprüche 1 bis 11 definiert ist.

## Claims

1. Positive electrode for lithium battery, and in particular a lithium-metal-polymer battery comprising at least one positive electrode active material, at least one binder, at least one agent imparting electronic conducting properties and at least one current collector, said electrode being **characterized in that** it comprises:
a) an electroactive layer of a composite material comprising:
- at least one polymer P1 selected from among polymers that are conducting within the window of use potentials of said battery, and isolating at a potential lower than 1.5V vs Li/Li⁺ and/or higher than 4.8 V vs Li/Li⁺,
- at least one polymer P2 selected from among halogenated polymers, and
- at least one lithium salt contained in a molar concentration of between 0.1 M and 5 M;
b) a current collector;
c) a layer of positive electrode composite material comprising:
- at least one positive electrode active material;
- at least one agent imparting electronic conducting properties;
- at least one binder; and
- at least one lithium salt;
and **in that** the electroactive layer is intercalated between the current collector and the layer of positive electrode composite material

2. The electrode according to claim 1, **characterized in that** the polymer P1 is selected from among polymers that are isolating at a potential lower than 2.8 V and higher than 3.6 V.

3. The electrode according to claim 1, **characterized in that** the polymer P1 is selected from among polyanilines, polythiophenes, polypyrroles and poly3,4-ethylenedioxythiophenes.

4. The electrode according to any of the preceding claims, **characterized in that** the halogenated polymer P2 is a fluorinated polymer selected from among homopolymers and copolymers of vinyl chloride, vinylidene fluoride, vinylidene chloride, ethylene tetrafluoride, chlorotrifluoroethylene, copolymers of vinylidene fluoride and hexafluoropropylene, and mixtures of these homopolymer and copolymers.

5. The electrode according to claim 4, **characterized in that** the polymer P2 is polyvinylidene fluoride.

6. The electrode according to any of the preceding claims, **characterized in that** the polymer P2 represents 1 to 20 weight % relative to the weight of polymer P1.

7. The electrode according to any of the preceding claims, **characterized in that** the lithium salt(s) are selected from among LiBF₄, LiPF₆, lithium bis(trifluoromethylsulfonyl)imide, lithium bis(fluorosulfonyl)imide (LiFSI), lithium bis(pentafluoroethylsulfonyl)imide, LiAsF₆, LiCF₃SO₃, LiSbF₆, LiSbCl₆, Li₂TiCl₆, Li₂SeCl₆, Li₂B₁₀Cl₁₀, Li₂B₁₂Cl₁₂ and lithium bis(oxalate)borate.

8. The electrode according to any of the preceding claims, **characterized in that** the positive electrode active material is an iron phosphate-containing material.

9. The electrode according to claim 8, **characterized in that** the positive electrode active material is LiFePO₄ in the form of uncoated particles or comprising a carbon coating.

10. The electrode according to any of the preceding claims, **characterized in that** the agent imparting electronic conducting properties is carbon, selected from among carbon blacks, carbon nanotubes, graphite and mixtures of these materials.

11. The electrode according to any of the preceding claims, **characterized in that** the electroactive layer has a thickness varying from 1 to 15 µm, for a layer of positive electrode active material having a thickness varying from 20 to 100 µm.

12. Lithium battery comprising at least one positive electrode, a negative electrode, an electrolyte and a current collector for the positive electrode, **characterized in that** the positive electrode is such as defined in any of claims 1 to 11.
